# EUROPEAN PATENT SPECIFICATION

(11) **EP 2 669 558 B1**
(45) Date of publication and mention of the grant of the patent: **08.04.2020**
(21) Application number: 11856841.9
(22) Date of filing: 26.10.2011
(51) Int. Cl.: F16K 31/02, E03C 1/05

(54) **HUMAN BODY SENSITIVE TOUCH-CONTROLLED WATER OUTLET DEVICE AND CONTROL METHOD THEREOF**
AUF DEN MENSCHLICHEN KÖRPER REAGIERENDE BERÜHRUNGSGESTEUERTE WASSERAUSLASSVORRICHTUNG UND STEUERVERFAHREN DAFÜR
DISPOSITIF DISTRIBUTEUR D'EAU À COMMANDE TACTILE SENSIBLE AU CORPS HUMAIN ET SON PROCÉDÉ DE COMMANDE

(30) Priority: 30.01.2011 CN 201110032791
(43) Date of publication of application: 04.12.2013
(73) Proprietor: Guangzhou Seagull Kitchen And Bath Products Co., Ltd., Guangzhou, Guangdong 511400 (CN); Guangzhou Neon Plumbing Products Co., Ltd., Guangzhou, Guangdong 511400 (CN); Zhuhai Seagull Kitchen And Bath Products Co., Ltd., Zhuhai, Guangdong 519170 (CN); Zhuhai Bow Kitchen And Bath Products Co., Ltd., Zhuhai, Guangdong 519170 (CN); Zhuhai Edison Ecotech Corporation Co., Ltd., Zhuhai, Guangdong 519170 (CN)
(72) Inventor: YANG, Yuanhong, Guangzhou, Guangdong 511400 (CN)
(74) Representative: Groth & Co. KB
(86) International application number: PCT/CN2011/001789
(87) International publication number: WO 2012/100397

(56) References cited:
- EP-A1- 1 739 241
- EP-A2- 1 662 056
- EP-A2- 2 103 749
- WO-A1-01/20204
- WO-A1-2006/061657
- WO-A1-2008/118402
- CN-A- 101 936 418
- CN-A- 102 072 340
- CN-U- 201 627 971
- CN-U- 201 627 971
- CN-U- 202 012 641
- US-A- 5 243 717
- US-A1- 2005 150 556
- US-A1- 2007 069 169
- US-A1- 2007 246 550
- US-A1- 2009 039 176

## Description

### Field of the Invention

The present invention relates to a device for supplying water, in particularly relates to a body induction touch control faucet device.

### Description of the Related Art

A faucet is a device for supplying water which is commonly used in daily life. Currently, most of commercial available faucets are controlled through traditional manual mechanical methods, and can be adjusted manually while being used. It is not only inconvenient for users, but also prone to bringing physical deterioration, so that it may cause problems such as lack of flexibility of the faucet and water leakage. Therefore, induction faucets emerged. Usually, the induction faucet disclosed in the existing technology may comprise infrared induction faucets. However, the infrared induction faucet may be limited by controlling angle, which means if the valve of the angle is larger than that of an induction angle, the induction faucet may fail to supply water, which brings about inconvenience. Furthermore, another problem of the infrared induction faucet is time delay, i.e. supplying water may be delayed for a while when user's hand may be inducted, and when user's hand leaves the induction zone, closing the induction faucet may also be delayed for a while, which causes waste of water.

In order to solve the above problems, China patent literature with publication No.CN201627971U discloses a body induction touch control faucet, comprising an inlet unit, a faucet body and a switch unit. The faucet body is made of metal and the switch unit may comprise a signal processing module, a preset signal comparing module, a controller and an electromagnetic valve. The signal processing module may comprise an input terminal and an output terminal, and the output terminal is in connection with the faucet body through signal line; the comparing module is in connection with the output terminal of the signal processing module; the controller is in connection with the comparing module; the electromagnetic valve is in connection with the controller and the electromagnetic valve may be arranged between the inlet unit and the faucet body.

It is disclosed in this patent literature that the entire faucet body may be configured as a touch sensing zone, which may receive induction signal through the signal processing module and the comparing module arranged on a circuit board, so as to open or close the faucet through touch control. However, since the entire faucet body may be configured as a touch sensing zone, its switch may be activated even if people touch the faucet body unintentionally while they are washing hands, which may cause mis-operation. Furthermore, because an induction signal may be obtained through filtering and amplifying by the signal processing module as well as being compared by the comparing module, which may be easily affected by ambient humidity and external signals, identification of induction signal may be affected. In addition, it was disclosed in this patent literature that adjustment of water temperature is controlled by mechanical valve, which may cause problems such as mechanical wear and low usability, and adjustment of water temperature may only be adjusted gradually instead of direct switch among hot water, cold water and warm water. It may waste water during adjustment and may not provide lots of choices of types of water to be supplied.

### SUMMARY OF THE INVENTION

In view of the above-described problems, one of the objectives of this invention is to provide a body induction touch control faucet device with specific sensing zones and high accuracy for touch sensing, in order to solve problems of touch sensing faucet device of prior art, such as touch sensing zone prone to being operated by mistake, or touch signals affected by external environment easily.

Another objective of this invention is to provide a body induction touch control faucet device with a function of switching among cold water, warm water and hot water, so as to solve the problems of touch sensing faucet device with a mechanical valve adjusting water temperature of prior art, such as mechanical wear, incontinent for using and limited for adjusting.

To achieve the above mentioned objectives, in accordance with one embodiment of this invention, there is provided a body induction touch control faucet device according to claim 1.

In a class of this embodiment, the faucet device further comprises a plurality of water temperature indicating devices, mounted on the faucet body and in connection with the control module;
and the control module may activate a corresponding water temperature indicating device according to the type of water selected through an induction signal.

In a class of this embodiment, the faucet device further comprises
a voltage detecting module, in connection with the power module, adapted for detecting voltage of the power module; and
a lower voltage alarming device, arranged on the faucet body and in connection with the voltage detecting module;
if voltage detected by the voltage detecting module is lower than alarm voltage, the lower voltage alarming device may give an alarm.

In a class of this embodiment, the faucet device further comprises
a delay selection switch, in connection with the control module and adapted for setting outflow time of the faucet body for supplying water.

In a class of this embodiment, the touch sensing module may comprise a human body touch sensing chip.

To achieve the above mentioned objectives, in accordance with one embodiment of this invention, there is provided a method for controlling the faucet device of this invention, comprising steps of:
step 1: when the faucet device is in its closed state and a sensing zone for switch control is touched by a human body, a touch sensing module may detect a touch signal and output an induction signal for supplying water to a control module after processing such touch signal, and the control module may open a water inlet electromagnetic valve after receiving the induction signal for supplying water; and then, water flows into the faucet body through the mixing valve and flows out through the outlet of the faucet body;
step 2: when a sensing zone for water temperature switching is touched by a human body, the touch sensing module may detect a touch signal and select the type of water to be supplied based on preset times of touching correspondingly, and output an induction signal related to a type of water after processing such touch signal; the control module may select and open corresponding water inlet electromagnetic valve to supply water based on the type of water selected after receiving the induction signal related to a type of water ;
step 3: when the sensing zone for switch control is touched again by a human body, the touch sensing module may detect a touch signal and process the same into an induction signal for stopping water supply, and then transmit the induction signal for stopping water supply to the control module; the control module may close the inlet control valve that is in its open state after receiving the induction signal for stopping water supply, in order to stop supplying water.

To achieve the above mentioned objectives, in accordance with one embodiment of this invention, there is provided a method for controlling the faucet device of this invention, comprising steps of:
step 1: when the faucet device is in its closed state and a sensing zone for water temperature switching is touched by a human body, a touch sensing module may detect a touch signal and output an induction signal related to a type of water based on preset times of touching correspondingly after processing such touch signal; a control module may select corresponding water inlet electromagnetic valve after receiving the induction signal for supplying water;
step 2: when the sensing zone for switch control is touched by a human body, the touch sensing module may detect a touch signal and output an induction signal for supplying water to a control module; after receiving the induction signal for supplying water, the control module may open the inlet electromagnetic valve selected, so as to let water flow into the faucet body through the mixing valve and flow out through the outlet of the faucet body;
step 3: when the sensing zone for switch control is touched again by a human body, the touch sensing module may detect a touch signal and output an induction signal for stopping water supply to the control module after processing such touch signal; after receiving the induction signal for stopping water supply, the control module may close the inlet control valve that is in its open state, so as to stop supplying water through the outlet of the faucet body.

In a class of this embodiment, the type of water may be cold water, warm water or hot water; cold water may be selected if the sensing zone is touched once, warm water may be selected if the sensing zone is touched twice, and hot water may be selected if the sensing zone is touched three times; but it does not work if the sensing zone is touched more than three times;
when the sensing zone for water temperature switching is touched by a human body once, the touch sensing module may detect a touch signal and output an induction signal related to cold water after processing such touch signal; the control module may receive such induction signal related to cold water and open a cold water inlet electromagnetic valve instead of a hot water inlet electromagnetic valve;
when the sensing zone for water temperature switching is touched twice by a human body, the touch sensing module may detect a touch signal and output an induction signal related to warm water after processing; the control module may receive such induction signal related to warm water and open both of the cold water inlet electromagnetic valve and the hot water inlet electromagnetic valve;
when the sensing zone for water temperature switching is touched three times by a human body, the touch sensing module may detect a touch signal and output an induction signal related to hot water after processing such touch signal; the control module may receive such induction signal related to hot water and open the hot water inlet electromagnetic valve instead of the cold water inlet electromagnetic valve.

In a class of this embodiment, after receiving the induction signal related to a type of water, the control module may activate a water temperature indicating device corresponding to the type of water.

In a class of this embodiment, the control module may comprise memory function, adapted for recording the information about the type of water which is selected through the sensing zone for water temperature switching, which allows to supply water with the type recorded for the last use when the sensing zone for switch control is touched next time.

In a class of this embodiment, the touch sensing module may comprise key-locking and unlocking functions, when key-locking function is activated, any touching on the sensing zone for switch control or the sensing zone for water temperature switching does not work.

Advantages of this invention are summarized below:
1. The body induction touch control faucet device of this invention comprises a faucet body provided with an outlet, a cold water inlet pipe, a hot water inlet pipe and a switch unit comprising a touch sensing module, a control module and a power module, and wherein, when the sensing zone for switch control or sensing zone for water temperature switching arranged on the faucet body is touched by a human body, the induction signal may be identified by the touch sensing module, and corresponding induction signal may be outputted to the control module, which may open and close the faucet device in terms of selected type of water to be supplied based on the induction signal, in addition, the faucet device may be opened and closed by touching a specific zone, so as to avoid mis-operation if the entire faucet body is configured as a touching induction zone and thus save water. Furthermore, the type of water to be supplied may be selected by touching the specific zone, and the type of water to be supplied may be set in terms of temperature of water, such as hot water, cold water and warm water, and also may be set in terms of other factors based on user's needs. Therefore, the type of water to be supplied may be selected by touching, which may solve the above-mentioned problems of the prior art, so the faucet device of this invention may have advantages such as ease of use, high touching accuracy and intelligence.
2. It is advantageous for the faucet device of this invention, to further comprise a plurality of water temperature indicating devices, such as indicator lamps, which may give an indication corresponding to the type of water to be supplied, because it may indicate the type of water to be supplied to users, so as to facilitate the use and switching of the faucet device.
3. It is advantageous for the faucet device of this invention, to further comprise a lower power alarming device which may give an alarm when voltage of the power module is lower than the threshold for alarming, because it can remind the users to change the power module to guarantee daily use.
4. It is advantageous for the faucet device of this invention to further comprise a metallic faucet body, a left hollow tube, a right hollow tube and an outlet tube, all of which may be in connection with each other through an insulating member, wherein the left hollow tube is configured as a sensing zone for water temperature switching, the right hollow tube is configured as a sensing zone for switch control and an outlet may be arranged on the outlet tube, because it allows the sensing zone to be easily set up, and will not allow signals from both of the sensing zone to be mixed up, which improves touching accuracy and the design of the faucet device.
5. It is advantageous for the faucet device of this invention to further comprise a delay selection switch which may be in connection with the control module and be adapted for setting outflow time at which water begins to flow out of the faucet body, because it allows users to set outflow time and also allows the faucet device to be automatically closed when the time is up, without any need of touching the sensing zone again, and this may be very convenient for users.
6. It is advantageous for the touch sensing module of the faucet device of this invention to further comprise a body touch sensing chip, because a body touch sensing chip may help to improve touch sensing performance of the faucet device, and comparing to the identifying unit with simple circuit of the prior arts, the faucet device of this invention may be much more capable of identifying and anti-jamming.
7. It is advantageous for the method for controlling a faucet device of this invention, to comprises steps of: step 1: when the faucet device is in its closed state and a sensing zone for switch control is touched by a human body, a touch sensing module may detect a touch signal and a control module may execute a control instruction and open the electromagnetic valve; step2: when a sensing zone for water temperature switching is touched by a human body, the touch sensing module may detect a touch signal and select the type of water to be supplied based on pre-set times of touching correspondingly and the control module may execute a control instruction to select and open corresponding water inlet electromagnetic valve to supply water so that water may be supplied based on user's selection, because the method may allow water to be supplied very easily and may also meet the needs for different types of water to be supplied.
8. It is advantageous for the method for controlling a faucet device of this invention, to comprise the steps of selecting the type of water to be supplied with touching the sensing zone for water temperature switching, and then opening the outlet device with touching the sensing zone for switch control, because it may allow users to select the type of water prior to supplying water, which may save water.
9. It is advantageous for the method for controlling a faucet device of this invention, wherein, cold water may be selected if the sensing zone is touched once, warm water may be selected if the sensing zone is touched twice, and hot water may be selected if the sensing zone is touched three times, but it does not work if the sensing zone is touched more than three times, because it may allow users to set touching times based on using condition, in order to improve the usability of device.
10. It is advantageous for the method for controlling a faucet device of this invention, to comprise the steps of recording the information about the type of water which is selected through the sensing zone for water temperature switching, because it allows to supply water with the type recorded for the last use when the sensing zone for switch control is touched next time, so that there is no need to reset the type of water to be supplied if the type of water required is the same as the type recorded for the last use, which may improve the usability and intelligence of device.
11. It is advantageous for the method of controlling a faucet of this invention, wherein, the touch sensing module may comprise key-locking and unlocking functions and when key-locking function is activated, any touching on the sensing zone for switch control or the sensing zone for water temperature switching does not work, because it allows key-locking and unlocking functions to be set up according to user's need, which may enhance the functionality of the faucet device of this invention and bring more convenience to users so as to meet the needs for different situations.

### BRIEF DESCRIPTION OF THE DRAWINGS

Detailed description will be given below in conjunction with accompanying drawings:
FIG.1 is a schematic diagram of a body induction touch control faucet device according to one embodiment of this invention;
FIG.2 is an internal block diagram of a switch unit of a body induction touch control faucet device according to one embodiment of this invention;
FIG.3 is a function block diagram of a body induction touch control faucet device according to one embodiment of this invention;
FIG.4 is a circuit diagram of a touch sensing module of a body induction touch control faucet device according to one embodiment of this invention;
FIG.5 is a circuit diagram of a control module of a body induction touch control faucet device according to one embodiment of this invention;
FIG.6 is a schematic diagram of a delay selection switch of a body induction touch control faucet device according to one embodiment of this invention;
FIG.7 is a system block diagram of a control module of a body induction touch control faucet device according to one embodiment of this invention;
FIG.8 is a circuit diagram of a water temperature indicating device of a body induction touch control faucet device according to one embodiment of this invention;
FIG.9 and FIG.10 are drive circuit diagrams of an inlet electromagnetic valve of a body induction touch control faucet device according to one embodiment of this invention;
FIG.11 is a circuit diagram of a voltage detecting module of a body induction touch control faucet device according to one embodiment of this invention;
FIG.12 is a circuit diagram of a power module of a body induction touch control faucet device according to one embodiment of this invention.

In the drawings, the following reference numbers are used: 100- faucet device; 130, 140, 160- insulating member; 150- water outlet tube; 110- left hollow tube; 120-right hollow tube; 200- faucet base; 310- cold water inlet pipe; 320- hot water inlet pipe; 330- connecting pipe; 400- control case; 401- upper cover; 402- lower cover; 410- mixing valve; 420- outlet of the mixing valve; 430, 440- water inlet electromagnetic valves; 450- battery; 461- upper cover of a circuit board case; 462- a lower cover of a circuit board case; 463- circuit board; 500- connecting line; 501-waterproof plug; 600- external power module.

### DETAILED DESCRIPTION OF THE EMBOIMENTS

### Example 1

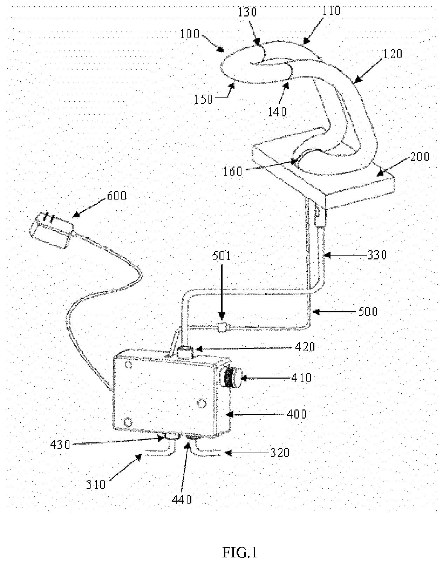

Referring to FIG.1, one embodiment of the body induction touch control faucet device of this invention comprises a faucet body 100 provided with an outlet, a cold water inlet pipe 310, a hot water inlet pipe 320 and a switch unit. Both of the cold water inlet pipe 310 and the hot water inlet pipe 320 are in connection with the faucet body 110 through a mixing valve 410, and the cold water inlet pipe 310 and the hot water inlet pipe 320 are in connection with an inlet of the mixing valve 410 through water inlet electromagnetic valves 430, 440 thereof respectively, and the faucet body 100 is in connection with an outlet 420 of the mixing valve, and the faucet body 100 is provided with a touch sensing zone for switch control and another sensing zone for water temperature switching.

The switch unit comprises:
a touch sensing module, which is in connection with the touch sensing zone for switch control and the sensing zone for water temperature switching respectively, for detecting and processing touch signal of the touch sensing zone for switch control and
the sensing zone for water temperature switching to output an induction signal corresponding with touching activity;
a control module, in connection with the touch sensing module, adapted to receive the induction signal output by the touch sensing module, and to activate the cold water inlet electromagnetic valve 430 and the hot water inlet electromagnetic valve 440 in terms of the induction signal;
a power module, for supplying power for the touch sensing module and the control module.

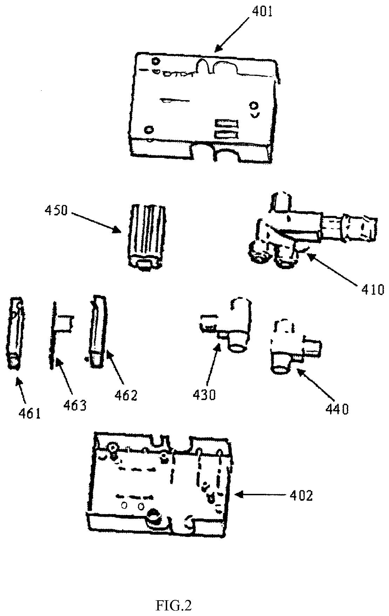

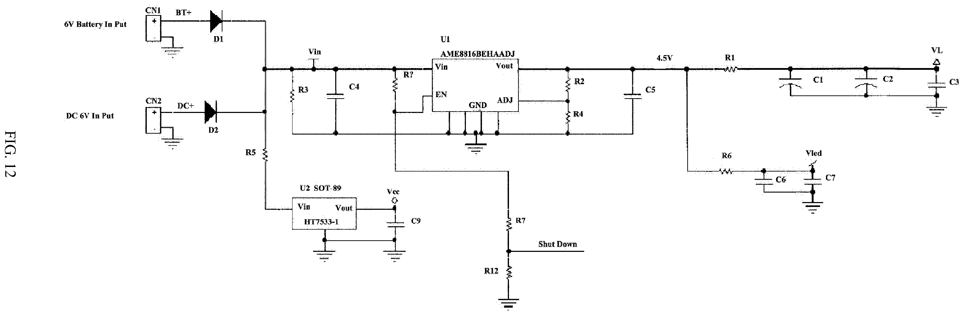

In this embodiment, the faucet body 100 may be made of metal and may be mounted on a faucet base 200, which comprises a left hollow tube 110, a right hollow tube 120 and a water outlet tube 150. Furthermore, the left hollow tube 110 may be the sensing zone for water temperature switching, and the right hollow tube 120 may be the touch sensing zone for switch control; a lower end of the left hollow tube 110 and a lower end of the right hollow tube 120 are connected with each other through an insulating member 160, and the lower ends are in connection with the outlet 420 of the mixing valve through a connecting pipe 330; the water outlet tube 150 is connected to the top areas of the left hollow tube 110 and the right hollow tube 120 through insulating members 130, 140 respectively; in this embodiment, the switch unit, the mixing valve 410 and the water inlet electromagnetic valves 430, 440 are all arranged inside the control case 400; FIG. 2 shows that the control case 400 comprises a upper cover 401 and a lower cover 402, and the switch unit is arranged on a circuit board 463 and enclosed by a upper cover 461 and a lower cover 462 of a circuit board case; a battery 450 is arranged inside the control case 400 for supplying power for the circuit board 463, meanwhile the power of the circuit board 463 may also be supplied by an external power module 600; FIG. 12 shows the principle of power supplying for the circuit board; the touch sensing module of the switch unit may be a body touch sensing chip, such as Holtek BS802B with high performance and the control module may be Sonix SCM SN8P2612S.

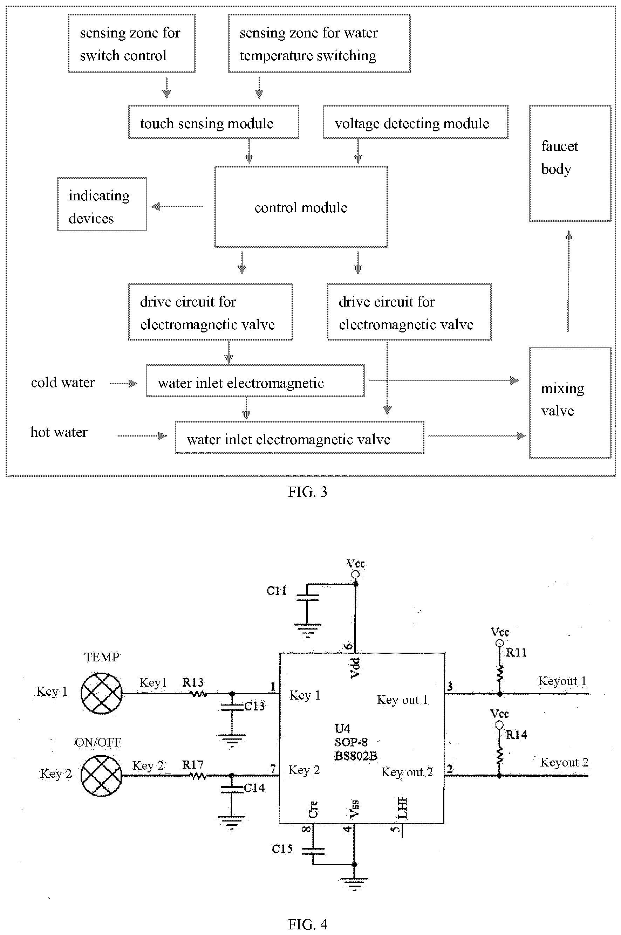

FIG. 3 shows a function block diagram for the body induction touch control faucet device, in this embodiment, a control method is disclosed, wherein
when the body induction touch control faucet device is in its closed state, the touch sensing module may detect a touch signal if the touch sensing zone for switch control is touched by a human body; after processing the touch signal, the touch sensing module may output an induction signal for supplying water to the control module, and the control module may control to open the water inlet electromagnetic valve after receiving the induction signal for supplying water; and then, water may flow into the faucet body through the mixing valve and flows out through the outlet of the faucet body;
when the sensing zone for water temperature switching is touched by a human body, the touch sensing module may detect a touch signal and select a type of water based on corresponding preset times of touching, and then may accordingly output an induction signal related to a type of water outflow type; the type of water may be cold water, warm water or hot water, and cold water may be selected if the sensing zone is touched once, warm water may be selected if the sensing zone is touched twice, and hot water may be selected if the sensing zone is touched three times; however, it does not work if the sensing zone is touched more than three times;
when the sensing zone for water temperature switching is touched once by a human body, the touch sensing module may detect a touch signal and output an induction signal related to cold water after processing such touch signal; the control module may open the cold water inlet electromagnetic valve instead of hot water inlet electromagnetic valve after receiving the induction signal related to cold water;
when the sensing zone for water temperature switching is touched twice by a human body, the touch sensing module may detect a touch signal and output an induction signal related to warm water after processing such touch signal; the control module may open both of the cold water inlet electromagnetic valve and the hot water inlet electromagnetic valve after receiving the induction signal related to warm water;
when the sensing zone for water temperature switching is touched three times by a human body, the touch sensing module may detect a touch signal and output an induction signal related to hot water after processing such touch signal, and then the control module may select to open the hot water inlet electromagnetic valve instead of the cold water inlet electromagnetic valve after receiving the induction signal for selecting hot water.

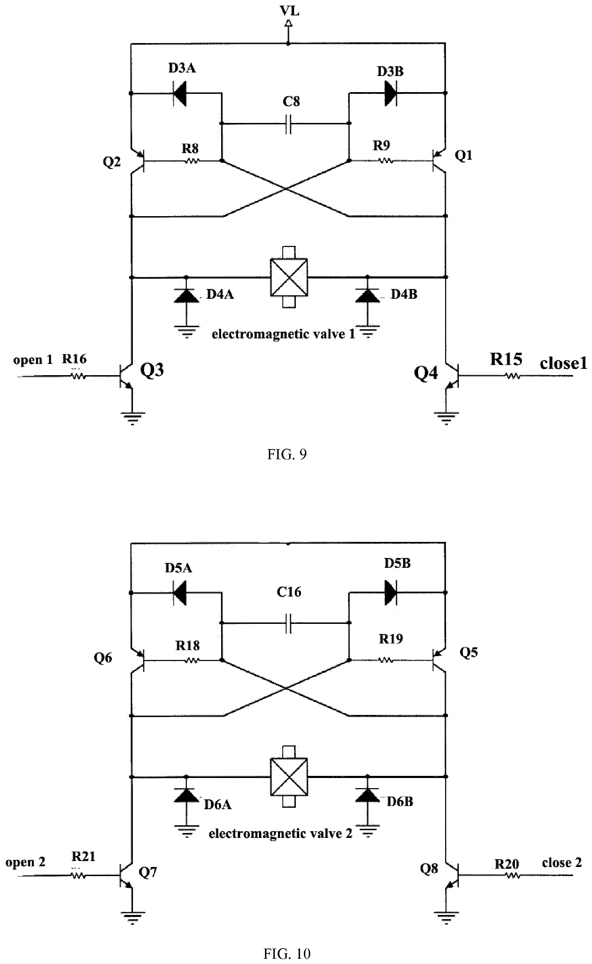

The control module may open the selected inlet electromagnetic valve and supply water based on the choice of a user, wherein, the driving circuit of the inlet electromagnetic valve may consist of four triodes and several resistances, capacitances and diodes, and the principle of the driving circuit is shown in FIG. 9 and FIG. 10.

In this embodiment, an off induction signal for stopping water supply may correspond to the fact that the touch sensing zone for switch control is continuously touched twice. When the touch sensing zone for switch control is touched again by a human body, the touch sensing module may detect a touch signal and output an induction signal for stopping water supply to the control module after processing such touch signal. The control module may close the inlet control valve that is in its open state after receiving the induction signal for stopping water supply, in order to stop supplying water through the outlet of the faucet body.

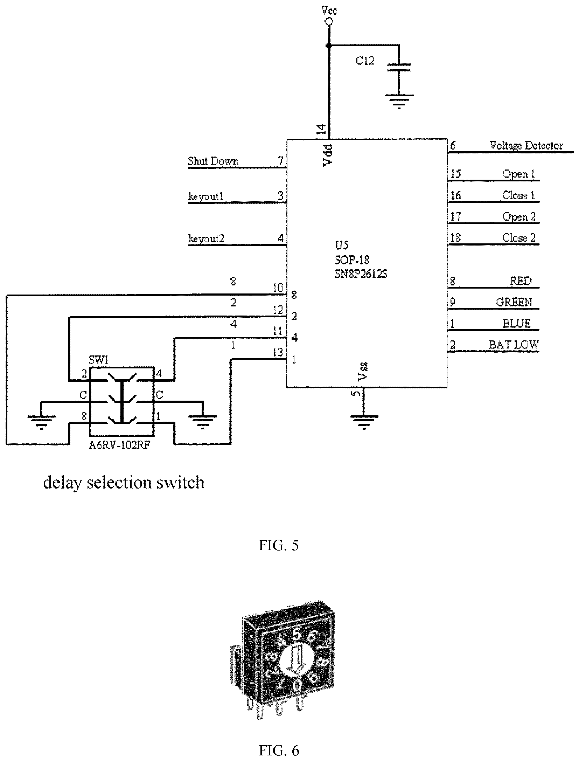

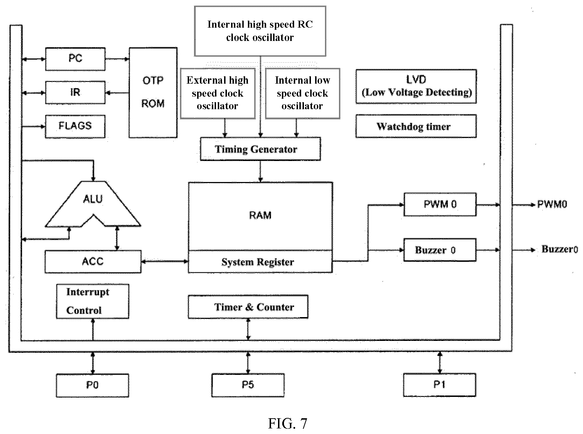

Regarding the above mentioned steps, the schematic diagram of the touch sensing module is shown in FIG. 4, the schematic diagram of the control module is shown in FIG. 5 and the system diagram of the control module is shown in FIG. 7.

### Example 2

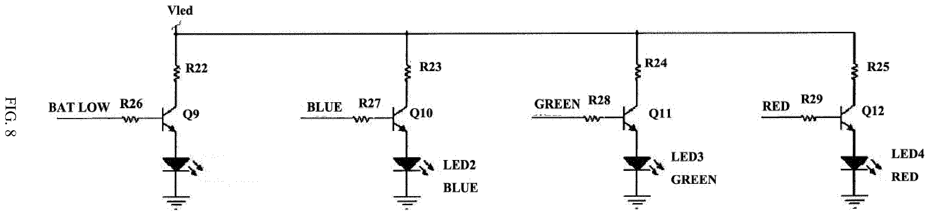

Based on the first embodiment, a plurality of water temperature indicating devices may be mounted on the faucet body 100. In this embodiment, the water temperature indicating devices may be indicator lamps. The indicator lamps for indicating water temperature may be respectively in connection with the control module through a connecting line 500, which may be connected to a waterproof plug 501. The control module may activate a corresponding indicator lamp according to the type of water to be supplied selected through the induction signal. In this embodiment, three indicator lamps may be arranged, the first of which is a blue lamp for indicating cold water, the second of which is a green lamp for indicating warm water and the third of which is red lamp for indicating hot water. As shown in FIG. 8, LED2 is the blue indicator lamp, LED3 is the green indicator lamp and LED4 is the red indicator lamp.

In this embodiment, the type of water to be supplied may be selected by touching the sensing zone for water temperature switching, and then the inlet electromagnetic valve may be opened by touching the touch sensing zone for switch control. The control method disclosed in this embodiment comprises:
when the body induction touch control faucet device is in its closed state, if the sensing zone for water temperature switching is touched by a human body, the touch sensing module may detect a touch signal, and output an induction signal related to a type of water to be supplied after processing such touch signal based on the type of water corresponding to the preset times of touching; the type of water may be cold water, warm water or hot water; cold water may be selected if it is touched once, warm water may be selected if it is touched twice, and hot water may be selected if it is touched three times; however, it does not work if the sensing zone is touched more than three times;
when the sensing zone for water temperature switching is touched once by a human body, the touch sensing module may detect a touch signal and output the induction signal related to cold water after processing the touch signal; the control module may receive such induction signal and open the cold water inlet electromagnetic valve instead of the hot water inlet electromagnetic valve, and then activate the blue LED2 for indicating cold water;
when the sensing zone for water temperature switching is touched twice by a human body, the touch sensing module may detect a touch signal and output an induction signal related to warm water after processing such touch signal; the control module may receive the induction signal related to warm water and open both of the cold water inlet electromagnetic valve and the hot water inlet electromagnetic valve, and then activate the green LED3 for indicating warm water;
when the sensing zone for water temperature switching is touched three times by a human body, the touch sensing module may detect a touch signal and output an induction signal related to hot water after processing such touch signal; the control module may receive the induction signal related to hot water and open the hot water inlet electromagnetic valve instead of the cold water inlet electromagnetic valve, and then activate the red LED4 for indicating hot water;
when the LEDS are activated, all of the LEDs may become bright gradually from darkness, which may take 3s, and then the LEDs may keep bright for another 0.5s; if no touch signal may be detected within a further 10s, the LEDs will be inactivated thereafter;
when the touch sensing zone for switch control is touched by a human body, the touch sensing module may detect a touch signal and output an induction signal for supplying water to the control module; after receiving the induction signal for supplying water, the control module may open the inlet electromagnetic valve selected in the above mentioned steps, so as to let water flow into the faucet body through the mixing valve and flow out the outlet of the faucet body;
when the touch sensing zone for switch control is touched again by a human body (for example being continuously touched twice), the touch sensing module may detect the touch signal and output an induction signal for stopping water supply to the control module after processing such touch signal; after receiving the induction signal for stopping water supply, the control module may close the inlet control valve that is in its open state, so as not to let water flow out via the outlet of the faucet body.

### Example 3

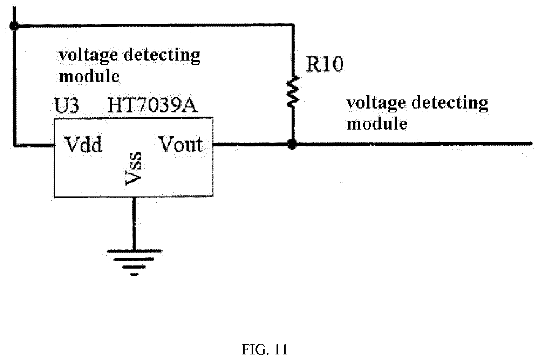

Based on the first and the second embodiment of this invention, the faucet is provided with a voltage detecting module, which is shown in FIG. 11. The voltage detecting module may be in connection with the battery 450 and may be adapted for testing the voltage of the battery. In this embodiment, the voltage detecting module may be Holtek HT7039A chip. A lower voltage alarming device may be arranged on the faucet body, and in this embodiment, the lower voltage alarming device may be an alarm lamp, which may be in connection with the voltage detecting module. If voltage detected by the voltage detecting module is lower than a threshold voltage for alarming, the lower alarm lamp will twinkle, which is shown in FIG. 8 and LED1 is a red lower voltage alarm lamp.

An alternative embodiment of this invention based on the above mentioned embodiments is provided, wherein, a delay selection switch may be further provided, which may be in connection with the control module and adapted for setting outflow time at which water begins to flow out of the faucet body. FIG. 5 and FIG. 6 show that SW1 is the delay selection switch. There are several gears for delay. When the pointer of SW1 indicates 0, the inlet electromagnetic valve may only be closed manually. When the pointer of SW1 indicates 1, there will be an automatic delay of 5s. When the pointer of SW1 indicates 2, there will be an automatic delay of 10s. When the pointer of SW1 indicates 3, there will be an automatic delay of 15s. When the pointer of SW1 indicates 4, there will be an automatic delay of 20s. When the pointer of SW1 indicates 5, there will be an automatic delay of 30s. When the pointer of SW1 indicates 6, there will be an automatic delay of 45s. When the pointer of SW1 indicates 7, there will be an automatic delay of 60s. When the pointer of SW1 indicates 8, there will be an automatic delay of 90s. When the pointer of SW1 indicates 9, there will be an automatic delay of 120s. During the time sequence of delay, people may close the valve manually by continuously touching the touch sensing zone for switch control twice.

The control method of this invention may further comprise:
if the voltage of the battery is lower than 3.9V, a low power instruction may be transmitted to the control module by the voltage detecting module; after receiving the low power instruction, the control module may output a twinkle instruction to the lower voltage alarm lamp LED1; the red LED1 may twinkle at a frequency of 1Hz to give an alarm;
when it is preset that the faucet can be closed through manual touch and automatic delay, which may be selected by SW1; and during the time sequence of delay, people may close the electromagnetic valve through manual touch;
the control module may record the information about the selected water temperature of the last use of the faucet, and may control to supply water at the temperature recorded for the next use; people only need to touch the sensing zone for switch control to open the faucet; when water flows out, the types of water which are defined in terms of temperature of water may be selected by touching the sensing zone for water temperature switching; as mentioned before, cold water will be selected by touching once and a blue LED will be activated, warm water will be selected by touching twice and a green LED (or orange LED) will be activated and hot water will be selected by touching three times and a red LED will be activated.

The faucet device of this invention may further comprise key-locking function. When the touch sensing zone for switch control is pressed for 5s, the red LED4 will twinkle three times at a frequency of 1Hz and then it will not work even if any sensing zone is touched ; after that, if the touch sensing zone for switch control is pressed for another 5s, the blue LED2 will twinkle three times at a frequency of 1Hz and then touching function will be recovered again; in this embodiment, this function may be realized through the control module, which may detect whether the touch sensing zone for switch control is pressed for a certain period of time (such as 5s); if the touch sensing zone for switch control is pressed for 5s, the control module may stop outputting control instructions even if it receives a touch signal, after that, it will not work anymore even if any sensing zone is touched, and the key-locking function is realized; if the sensing zone is pressed for a further 5s, the key-locking function will be cancelled, and the faucet may normally work.

The principle of body capacitance touching sensing of this invention is as follows. Because a human body is equivalent to a capacitance connected to the earth, when a metallic sensing zone, arranged on a right end or a left end of the faucet body, is touched by a human body (such as a finger), a induction capacitance is automatically formed between the earth and the left end or the right end of the faucet body. The capacity of the induction capacitance is usually bellow 100 pF. When the metallic sensing zone on the left end or the right end of the faucet body is touched by a human body, this induction capacitance will be detected by the touch sensing module, and based on the above mentioned principle, the touch sensing module may detect if the metallic sensing zone on the left end or the right end of the faucet body is touched by a human body according to the variation of the capacity of this capacitance.

Although the present invention has been described with particular reference to certain preferred embodiments thereof, variations and modifications of the present invention can be effected within the scope of the claims.

## Claims

1. A body induction touch control faucet device, comprising
a faucet body (100), provided with an outlet,
a cold water inlet pipe (310),
a hot water inlet pipe (320) and
a switch unit;
wherein, said cold water inlet pipe (310)and said hot water inlet pipe (320) are in connection with said faucet body through a mixing valve, and said cold water inlet pipe and said hot water inlet pipe are in connection with an inlet of said mixing valve (410) through water inlet electromagnetic valves (430, 440) thereof respectively, and said faucet body (100) is in connection with an outlet (420) of said mixing valve, said faucet device further comprises a sensing zone for switch control and a sensing zone for water temperature switching, arranged on said faucet body (100), adapted for being touched; and
said switch unit comprises a touch sensing module, which is in connection with said sensing zone for switch control and said sensing zone for water temperature switching respectively, for detecting a touch signal from said sensing zone for switch control and said sensing zone for water temperature switching, and for outputting an induction signal corresponding to a touch behaviour after processing said touch signal;
a control module, in connection with said touch sensing module, adapted to receive said induction signal outputted by said touch sensing module, and to activate said cold water inlet electromagnetic valve (430) and said hot water inlet electromagnetic valve (440) ; and
a power module, for supplying power for said touch sensing module and said control module;
**characterized in that**,
said faucet body (100) is made of metal and is mounted on a faucet base, which comprises a left hollow tube (110), a right hollow tube (120) and a water outlet tube (150); said left hollow tube (110) is said sensing zone for water temperature switching, and said right hollow tube is said sensing zone for switch control; a lower end of said left hollow tube (110) and a lower end of said right hollow tube are connected with each other through an insulating member, and are further connected with an outlet of said mixing valve through a connecting pipe (330); an upper end of said left hollow tube and an upper end of said right hollow tube are in connection with said water outlet tube through an insulating member (130, 140) respectively, and said outlet of the faucet body is provided on said water outlet tube (150).

2. A faucet device of claim 1, further comprising a plurality of water temperature indicating devices, mounted on said faucet body and in connection with said control module;
wherein, said control module is configured to activate a corresponding water temperature indicating device according to the type of water selected through an induction signal.

3. A faucet device of claim 1, further comprising
a voltage detecting module, in connection with said power module, adapted for detecting voltage of said power module; and
a lower voltage alarming device, arranged on said faucet body and in connection with said voltage detecting module;
wherein, if voltage detected by said voltage detecting module is lower than alarm voltage, said lower voltage alarming device gives an alarm.

4. A faucet device of claim 1, further comprising
a delay selection switch, in connection with said control module and adapted for setting outflow time of said faucet body for supplying water.

5. A faucet device of claim 1 or 2 or 3 or 4, wherein, said touch sensing module comprises a human body touch sensing chip.

6. A method for controlling a faucet device of any of claim 1-5, comprising steps of:
step 1: when said faucet device is in its closed state and the sensing zone for switch control is touched by a human body, the touch sensing module detects a touch signal and outputs an induction signal for supplying water to the control module after processing such touch signal, and said control module opens the water inlet electromagnetic valve after receiving said induction signal for supplying water; and then, water flows into said faucet body (100) through said mixing valve (410) and flows out through said outlet of said faucet body;
step 2: when the sensing zone for water temperature switching is touched by a human body, said touch sensing module detects a touch signal and selects the type of water to be supplied based on preset times of touching correspondingly, and outputs an induction signal related to the type of water after processing such touch signal; said control module selects and opens corresponding water inlet electromagnetic valve (430, 440) to supply water based on the type of water selected after receiving said induction signal related to the type of water ;
step 3: when said sensing zone for switch control is touched again by the human body, said touch sensing module detects a touch signal and processes the same into an induction signal for stopping water supply, and then transmits said induction signal for stopping water supply to said control module; said control module closes said inlet control valve that is in its open state after receiving said induction signal for stopping water supply, in order to stop supplying water.

7. A method for controlling a faucet device of any of claim 1-5, comprising steps of:
step 1: when said faucet device is in its closed state and the sensing zone for water temperature switching is touched by a human body, the touch sensing module detects a touch signal and outputs an induction signal related to a type of water based on preset times of touching correspondingly after processing such touch signal; the control module selects corresponding water inlet electromagnetic valve after receiving said induction signal for supplying water;
step 2: when said sensing zone for switch control is touched by a human body, said touch sensing module detects a touch signal and outputs an induction signal for supplying water to the control module; after receiving said induction signal for supplying water, said control module opens said inlet electromagnetic valve selected, so as to let water flow into said faucet body through said mixing valve and flow out through said outlet of said faucet body (100) ;
step 3: when said sensing zone for switch control is touched again by a human body, said touch sensing module detects a touch signal and outputs an induction signal for stopping water supply to said control module after processing such touch signal; after receiving said induction signal for stopping water supply, said control module closes said inlet control valve that is in its open state, so as to stop supplying water through said outlet of said faucet body.

8. The method of claim 6 or 7, wherein, in step 2 of said claim 6 or step 1 of said claim 7, said type of water is cold water, warm water or hot water; cold water is selected if the sensing zone for water temperature switching is touched once, warm water is selected if the sensing zone for water temperature switching is touched twice, and hot water is selected if the sensing zone for water temperature switching is touched three times; but it does not work if the sensing zone is touched more than three times; when said sensing zone for water temperature switching is touched by a human body once, said touch sensing module detects a touch signal and outputs an induction signal related to cold water after processing such touch signal; said control module receives such induction signal related to cold water and opens the cold water inlet electromagnetic valve (430) instead of the hot water inlet electromagnetic valve (440) ; when said sensing zone for water temperature switching is touched twice by a human body, said touch sensing module detects a touch signal and outputs an induction signal related to warm water after processing; said control module receives such induction signal related to warm water and opens both of said cold water inlet electromagnetic valve and said hot water inlet electromagnetic valve (440);
when said sensing zone for water temperature switching is touched three times by a human body, said touch sensing module detects a touch signal and outputs an induction signal related to hot water after processing such touch signal; said control module receives such induction signal related to hot water and opens said hot water inlet electromagnetic valve (440) instead of said cold water inlet electromagnetic valve (430).

9. The method of claim 8, wherein, after receiving said induction signal related to a type of water, said control module activates a water temperature indicating device corresponding to said type of water.

10. The method of claim 9, wherein, said control module comprises memory function, adapted for recording the information about said type of water which is selected through said sensing zone for water temperature switching, which allows to supply water with the type recorded for the last use when said sensing zone for switch control is touched next time.

11. The method of claim 10, wherein, said touch sensing module comprises key-locking and unlocking functions, when key-locking function is activated, any touching on said sensing zone for switch control or said sensing zone for water temperature switching does not work.

## Patentansprüche

1. Auf den Körper reagierende berührungsgesteuerte Induktionswasserhahnvorrichtung, umfassend
einen Wasserhahnkörper (100), der mit einem Auslass versehen ist,
ein Kaltwassereinlassrohr (310),
ein Heißwassereinlassrohr (320) und
eine Schalteinheit;
wobei das Kaltwassereinlassrohr (310) und das Heißwassereinlassrohr (320) durch ein Mischventil mit dem Wasserhahnkörper in Verbindung stehen und das Kaltwassereinlassrohr und das Heißwassereinlassrohr durch je ein elektromagnetisches Wassereinlassventil (430, 440) mit einem Einlass des Mischventils (410) in Verbindung stehen, und der Wasserhahnkörper (100) mit einem Auslass (420) des Mischventils in Verbindung steht, wobei die Wasserhahnvorrichtung ferner eine Sensorzone zur Schaltersteuerung und eine Sensorzone zum Schalten der Wassertemperatur umfasst, die am Wasserhahnkörper (100) angeordnet und zum Berühren eingerichtet sind; und
die Schalteinheit ein Berührungssensormodul umfasst, das mit der Sensorzone zur Schaltersteuerung bzw. der Sensorzone zum Schalten der Wassertemperatur in Verbindung steht, um ein Berührungssignal von der Sensorzone zur Schaltersteuerung und von der Sensorzone zum Schalten der Wassertemperatur zu erfassen und um nach Verarbeiten des Berührungssignals ein Induktionssignal entsprechend einem Berührungsverhalten auszugeben;
ein Steuermodul in Verbindung mit dem Berührungssensormodul, das dazu eingerichtet ist, das durch das Berührungssensormodul ausgegebene Induktionssignal zu empfangen und das elektromagnetische Kaltwassereinlassventil (430) und das elektromagnetische Heißwassereinlassventil (440) zu aktivieren; und
ein Energiemodul zur Energieversorgung des Berührungssensormoduls und des Steuermoduls;
**dadurch gekennzeichnet, dass**
der Wasserhahnkörper (100) aus Metall hergestellt ist und auf einer Wasserhahnbasis montiert ist, die ein linkes Hohlrohr (110), ein rechtes Hohlrohr (120) und ein Wasserauslassrohr (150) umfasst, das linke Hohlrohr (110) die Sensorzone zum Schalten der Wassertemperatur ist und das rechte Hohlrohr die Sensorzone zur Schaltersteuerung ist, ein unteres Ende des linken Hohlrohrs (110) und ein unteres Ende des rechten Hohlrohrs durch ein Isolierelement miteinander verbunden sind und ferner durch ein Verbindungsrohr (330) mit einem Auslass des Mischventils verbunden sind;
ein oberes Ende des linken Hohlrohrs und ein oberes Ende des rechten Hohlrohrs jeweils durch ein Isolierelement (130, 140) mit dem Wasserauslassrohr in Verbindung stehen und der Auslass des Wasserhahnkörpers am Wasserauslassrohr (150) vorgesehen ist.

2. Wasserhahnvorrichtung nach Anspruch 1, ferner umfassend eine Vielzahl von Wassertemperaturanzeigevorrichtungen, die am Wasserhahnkörper und in Verbindung mit dem Steuermodul montiert sind;
wobei das Steuermodul dazu eingerichtet ist, eine entsprechende Wassertemperaturanzeigevorrichtung gemäß der durch ein Induktionssignal ausgewählten Wasserart zu aktivieren.

3. Wasserhahnvorrichtung nach Anspruch 1, ferner umfassend ein Spannungserfassungsmodul in Verbindung mit dem Energiemodul, das zur Erfassung der elektrischen Spannung des Energiemoduls eingerichtet ist; und
eine Alarmvorrichtung für niedrigere Spannung, die am Wasserhahnkörper und in Verbindung mit dem Spannungserfassungsmodul angeordnet ist;
wobei, wenn die durch das Spannungserfassungsmodul erfasste Spannung niedriger als die Alarmspannung ist, die Alarmvorrichtung für niedrigere Spannung einen Alarm ausgibt.

4. Wasserhahnvorrichtung nach Anspruch 1, ferner umfassend
einen Verzögerungswahlschalter, der in Verbindung mit dem Steuermodul steht und zum Einstellen der Ausflusszeit des Wasserhahnkörpers zum Liefern von Wasser eingerichtet ist.

5. Wasserhahnvorrichtung nach Anspruch 1 oder 2 oder 3 oder 4, wobei das Berührungssensormodul einen Chip zum Erfassen der Berührung durch den menschlichen Körper umfasst.

6. Verfahren zum Steuern einer Wasserhahnvorrichtung nach einem der Ansprüche 1-5, umfassend die folgenden Schritte:
Schritt 1: Wenn sich die Wasserhahnvorrichtung im geschlossenen Zustand befindet und die Sensorzone zur Schaltersteuerung durch einen menschlichen Körper berührt wird, erfasst das Berührungssensormodul ein Berührungssignal und gibt nach Verarbeiten dieses Berührungssignals ein Induktionssignal zum Liefern von Wasser an das Steuermodul aus, und das Steuermodul öffnet das elektromagnetische Wassereinlassventil, nach Empfangen des Induktionssignals zum Liefern von Wasser, und daraufhin fließt Wasser durch das Mischventil (410) in den Wasserhahnkörper (100) und fließt durch den Auslass des Wasserhahnkörpers heraus;
Schritt 2: Wenn die Sensorzone zum Schalten der Wassertemperatur durch einen menschlichen Körper berührt wird, erfasst das Berührungssensormodul ein Berührungssignal und wählt die zu liefernde Wasserart basierend auf voreingestellten Berührungszeiten entsprechend aus und gibt nach Verarbeiten dieses Berührungssignals ein Induktionssignal bezüglich der Wasserart aus; das Steuermodul wählt und öffnet ein entsprechendes elektromagnetisches Wassereinlassventil (430, 440), um Wasser basierend auf der ausgewählten Wasserart zu liefern, nachdem es das Induktionssignal bezüglich der Wasserart empfangen hat;
Schritt 3: Wenn die Sensorzone zur Schaltersteuerung erneut durch den menschlichen Körper berührt wird, erfasst das Berührungssensormodul ein Berührungssignal und verarbeitet dieses in ein Induktionssignal zum Beenden der Wasserlieferung und überträgt anschließend das Induktionssignal zum Beenden der Wasserlieferung an das Steuermodul; nach Empfangen des Induktionssignals zum Beenden der Wasserlieferung schließt das Steuermodul das Einlasssteuerventil, das sich im geöffneten Zustand befindet, um das Liefern von Wasser zu beenden.

7. Verfahren zum Steuern einer Wasserhahnvorrichtung nach einem der Ansprüche 1-5, umfassend die folgenden Schritte:
Schritt 1: Wenn sich die Wasserhahnvorrichtung im geschlossenen Zustand befindet und die Sensorzone zum Schalten der Wassertemperatur durch einen menschlichen Körper berührt wird, erfasst das Berührungssensormodul ein Berührungssignal und gibt nach Verarbeiten dieses Berührungssignals ein Induktionssignal bezüglich einer Wasserart basierend auf entsprechend voreingestellten Berührungszeiten aus; das Steuermodul wählt nach Empfangen des Induktionssignals zum Liefern von Wasser ein entsprechendes elektromagnetisches Wassereinlassventil aus;
Schritt 2: Wenn die Sensorzone zur Schaltersteuerung durch einen menschlichen Körper berührt wird, erfasst das Berührungssensormodul ein Berührungssignal und gibt ein Induktionssignal zum Liefern von Wasser an das Steuermodul aus; nach Empfangen des Induktionssignals zum Liefern von Wasser öffnet das Steuermodul das ausgewählte elektromagnetische Einlassventil, sodass Wasser durch das Mischventil in den Wasserhahnkörper fließt und durch den Auslass des Wasserhahnkörpers (100) ausfließt;
Schritt 3: Wenn die Sensorzone zur Schaltersteuerung erneut durch einen menschlichen Körper berührt wird, erfasst das Berührungssensormodul ein Berührungssignal und gibt nach Verarbeiten dieses Berührungssignals ein Induktionssignal zum Beenden der Wasserlieferung an das Steuermodul aus; nach Empfangen des Induktionssignals zum Beenden der Wasserlieferung schließt das Steuermodul das Einlasssteuerventil, das sich im geöffneten Zustand befindet, um das Liefern von Wasser durch den Auslass des Wasserhahnkörpers zu beenden.

8. Verfahren nach Anspruch 6 oder 7, wobei in Schritt 2 des Anspruchs 6 oder Schritt 1 des Anspruchs 7 die Wasserart Kaltwasser, Warmwasser oder Heißwasser ist; wobei Kaltwasser ausgewählt wird, wenn die Sensorzone zum Schalten der Wassertemperatur einmal berührt wird, Warmwasser ausgewählt wird, wenn die Sensorzone zum Schalten der Wassertemperatur zweimal berührt wird, und Heißwasser ausgewählt wird, wenn die Sensorzone zum Schalten der Wassertemperatur dreimal berührt wird; wobei jedoch keine Wirkung vorhanden ist, wenn die Sensorzone mehr als dreimal berührt wird;
wobei, wenn die Sensorzone zum Schalten der Wassertemperatur einmal durch einen menschlichen Körper berührt wird, das Berührungssensormodul ein Berührungssignal erfasst und nach Verarbeiten dieses Berührungssignals ein Induktionssignal bezüglich Kaltwasser ausgibt, das Steuermodul dieses Induktionssignal bezüglich Kaltwasser empfängt und das elektromagnetische Kaltwassereinlassventil (430) anstelle des elektromagnetischen Heißwassereinlassventils (440) öffnet;
wobei, wenn die Sensorzone zum Schalten der Wassertemperatur zweimal durch einen menschlichen Körper berührt wird, das Berührungssensormodul ein Berührungssignal erfasst und nach Verarbeiten ein Induktionssignal bezüglich Warmwasser ausgibt, das Steuermodul dieses Induktionssignal bezüglich Warmwasser empfängt und sowohl das elektromagnetische Kaltwassereinlassventil als auch das elektromagnetische Heißwassereinlassventil (440) öffnet;
wobei, wenn die Sensorzone zum Schalten der Wassertemperatur dreimal durch einen menschlichen Körper berührt wird, das Berührungssensormodul ein Berührungssignal erfasst und nach Verarbeiten dieses Berührungssignals ein Induktionssignal bezüglich Heißwasser ausgibt, das Steuermodul dieses Induktionssignal bezüglich Heißwasser empfängt und das elektromagnetische Heißwassereinlassventil (440) anstelle des elektromagnetischen Kaltwassereinlassventils (430) öffnet.

9. Verfahren nach Anspruch 8, wobei das Steuermodul nach Empfangen des Induktionssignals bezüglich einer Wasserart eine der Wasserart entsprechende Wassertemperaturanzeigevorrichtung aktiviert.

10. Verfahren nach Anspruch 9, wobei das Steuermodul eine Speicherfunktion umfasst, die zum Aufzeichnen von Informationen über die durch die Sensorzone zum Schalten der Wassertemperatur ausgewählte Wasserart eingerichtet ist, was es ermöglicht, Wasser in der für die letzte Verwendung aufgezeichneten Art zu liefern, wenn die Sensorzone zur Schaltersteuerung das nächste Mal berührt wird.

11. Verfahren nach Anspruch 10, wobei das Berührungssensormodul Schlüsselsperr- und Schlüsselentsperrfunktionen umfasst, wobei bei Aktivieren der Schlüsselsperrfunktion ein Berühren der Sensorzone zur Schaltersteuerung oder der Sensorzone zum Schalten der Wassertemperatur keine Wirkung aufweist.

## Revendications

1. Dispositif de robinet à commande tactile sensible au corps humain, comprenant :
un corps de robinet (100), pourvu d'une sortie,
un tuyau d'arrivée d'eau froide (310),
un tuyau d'arrivée d'eau chaude (320) et
une unité d'interrupteur ;
ledit tuyau d'arrivée d'eau froide (310) et ledit tuyau d'arrivée d'eau chaude (320) étant en raccordement avec ledit corps de robinet par l'intermédiaire d'une vanne de mélange, et ledit tuyau d'arrivée d'eau froide et ledit tuyau d'arrivée d'eau chaude étant en raccordement avec une arrivée de ladite vanne de mélange (410) par l'intermédiaire de vannes électromagnétiques d'arrivée d'eau (430, 440) de celle-ci respectivement, et ledit corps de robinet (100) étant en raccordement avec une sortie (420) de ladite vanne de mélange, ledit dispositif de robinet comprenant en outre une zone de détection de commande d'interrupteur et une zone de détection de basculement de température d'eau, agencées sur ledit corps de robinet (100), adaptées pour être touchées ; et
ladite unité d'interrupteur comprenant un module de détection tactile, qui est en raccordement avec ladite zone de détection de commande d'interrupteur et avec ladite zone de détection de basculement de température d'eau respectivement, pour détecter un signal tactile provenant de ladite zone de détection de commande d'interrupteur et de ladite zone de détection de basculement de température d'eau, et pour émettre un signal d'induction correspondant à un comportement tactile après le traitement dudit signal tactile ;
un module de commande, en raccordement avec ledit module de détection tactile, adapté pour recevoir ledit signal d'induction émis par ledit module de détection tactile, et pour activer ladite vanne électromagnétique d'arrivée d'eau froide (430) et ladite vanne électromagnétique d'arrivée d'eau chaude (440) ; et
un module d'alimentation, pour fournir de l'énergie audit module de détection tactile et audit module de commande ;
**caractérisé en ce que**,
ledit corps de robinet (100) est en métal et est monté sur une base de robinet, qui comprend un tube creux gauche (110), un tube creux droit (120) et un tube de sortie d'eau (150) ; ledit tube creux gauche (110) est ladite zone de détection de basculement de température d'eau, et ledit tube creux droit est ladite zone de détection de commande d'interrupteur ; une extrémité inférieure dudit tube creux gauche (110) et une extrémité inférieure dudit tube creux droit sont raccordées l'une à l'autre par un élément isolant, et sont en outre raccordées à une sortie de ladite vanne de mélange par un tuyau de raccordement (330) ; une extrémité supérieure dudit tube creux gauche et une extrémité supérieure dudit tube creux droit sont respectivement raccordées audit tube de sortie d'eau par un élément isolant (130, 140), et ladite sortie du corps de robinet est prévue sur ledit tube de sortie d'eau (150).

2. Dispositif de robinet selon la revendication 1, comprenant en outre une pluralité de dispositifs d'indication de température d'eau, montés sur ledit corps de robinet et en raccordement avec ledit module de commande ;
ledit module de commande étant configuré pour activer un dispositif d'indication de température d'eau correspondant en fonction du type d'eau sélectionné par un signal d'induction.

3. Dispositif de robinet selon la revendication 1, comprenant en outre :
un module de détection de tension, en raccordement avec ledit module d'alimentation, adapté pour détecter la tension dudit module d'alimentation ; et
un dispositif d'alarme de tension inférieure, agencé sur ledit corps de robinet et en raccordement avec ledit module de détection de tension ;
si la tension détectée par ledit module de détection de tension est inférieure à la tension d'alarme, ledit dispositif d'alarme de tension inférieure générant une alarme.

4. Dispositif de robinet selon la revendication 1, comprenant en outre :
un interrupteur de sélection de retard, en raccordement avec ledit module de commande et adapté pour régler la durée d'écoulement dudit corps de robinet pour fournir de l'eau.

5. Dispositif de robinet selon la revendication 1 ou 2 ou 3 ou 4, ledit module de détection tactile comprenant une puce de détection tactile de corps humain.

6. Procédé de commande d'un dispositif de robinet selon l'une quelconque des revendications 1 à 5, comprenant les étapes :
étape 1 : lorsque ledit dispositif de robinet est dans son état fermé et que la zone de détection de commande d'interrupteur est touchée par un corps humain, le module de détection tactile détecte un signal tactile et émet un signal d'induction pour fournir de l'eau au module de commande après le traitement d'un tel signal tactile, et ledit module de commande ouvre la vanne électromagnétique d'arrivée d'eau après avoir reçu ledit signal d'induction pour fournir de l'eau ; et ensuite, l'eau s'écoule dans ledit corps de robinet (100) à travers ladite vanne de mélange (410) et s'écoule par ladite sortie dudit corps de robinet ;
étape 2 : lorsque la zone de détection de basculement de température d'eau est touchée par un corps humain, ledit module de détection tactile détecte un signal tactile et sélectionne le type d'eau à fournir sur la base du nombre de touchers préétabli de manière correspondante, et émet un signal d'induction relatif au type d'eau après le traitement d'un tel signal tactile ; ledit module de commande sélectionne et ouvre la vanne électromagnétique d'arrivée d'eau correspondante (430, 440) pour fournir de l'eau sur la base du type d'eau sélectionné après avoir reçu ledit signal d'induction relatif au type d'eau ;
étape 3 : lorsque ladite zone de détection de commande d'interrupteur est à nouveau touchée par le corps humain, ledit module de détection tactile détecte un signal tactile et traite ce même signal tactile en un signal d'induction pour arrêter la fourniture d'eau, et transmet ensuite ledit signal d'induction audit module de commande pour arrêter la fourniture d'eau ; ledit module de commande ferme ladite vanne de commande d'arrivée qui est dans son état ouvert après avoir reçu ledit signal d'induction pour arrêter la fourniture d'eau, afin d'arrêter de fournir de l'eau.

7. Procédé de commande d'un dispositif de robinet selon l'une quelconque des revendications 1 à 5, comprenant les étapes :
étape 1 : lorsque ledit dispositif de robinet est dans son état fermé et que la zone de détection de basculement de température d'eau est touchée par un corps humain, le module de détection tactile détecte un signal tactile et émet un signal d'induction relatif à un type d'eau sur la base du nombre de touchers préétabli de manière correspondante après le traitement d'un tel signal tactile ; le module de commande sélectionne la vanne électromagnétique d'arrivée d'eau correspondante après avoir reçu ledit signal d'induction pour fournir de l'eau ;
étape 2 : lorsque ladite zone de détection de commande d'interrupteur est touchée par un corps humain, ledit module de détection tactile détecte un signal tactile et émet un signal d'induction pour fournir de l'eau au module de commande ; après avoir reçu ledit signal d'induction pour fournir de l'eau, ledit module de commande ouvre ladite vanne électromagnétique d'arrivée sélectionnée, de manière à laisser l'eau s'écouler dans ledit corps de robinet à travers ladite vanne de mélange et s'écouler vers l'extérieur à travers ladite sortie dudit corps de robinet (100) ;
étape 3 : lorsque ladite zone de détection de commande d'interrupteur est à nouveau touchée par un corps humain, ledit module de détection tactile détecte un signal tactile et émet un signal d'induction audit module de commande pour arrêter la fourniture d'eau après le traitement d'un tel signal tactile ; après avoir reçu ledit signal d'induction pour arrêter la fourniture d'eau, ledit module de commande ferme ladite vanne de commande d'arrivée qui est dans son état ouvert, de manière à arrêter de fournir de l'eau par ladite sortie dudit corps de robinet.

8. Procédé selon la revendication 6 ou 7, dans lequel, à l'étape 2 de ladite revendication 6 ou à l'étape 1 de ladite revendication 7, ledit type d'eau est de l'eau froide, de l'eau tiède ou de l'eau chaude ; l'eau froide est sélectionnée si la zone de détection de basculement de température d'eau est touchée une fois, l'eau tiède est sélectionnée si la zone de détection de basculement de température d'eau est touchée deux fois, et l'eau chaude est sélectionnée si la zone de détection de basculement de température d'eau est touchée trois fois ; mais cela ne fonctionne pas si la zone de détection est touchée plus de trois fois ;
lorsque ladite zone de détection de basculement de température d'eau est touchée par un corps humain une fois, ledit module de détection tactile détecte un signal tactile et émet un signal d'induction relatif à l'eau froide après le traitement d'un tel signal tactile ; ledit module de commande reçoit un tel signal d'induction relatif à l'eau froide et ouvre la vanne électromagnétique d'arrivée d'eau froide (430) au lieu de la vanne électromagnétique d'arrivée d'eau chaude (440) ;
lorsque ladite zone de détection de basculement de température d'eau est touchée deux fois par un corps humain, ledit module de détection tactile détecte un signal tactile et émet un signal d'induction relatif à l'eau tiède après traitement ; ledit module de commande reçoit un tel signal d'induction relatif à l'eau tiède et ouvre à la fois ladite vanne électromagnétique d'arrivée d'eau froide et ladite vanne électromagnétique d'arrivée d'eau chaude (440) ;
lorsque ladite zone de détection de basculement de température d'eau est touchée trois fois par un corps humain, ledit module de détection tactile détecte un signal tactile et émet un signal d'induction relatif à l'eau chaude après le traitement d'un tel signal tactile ; ledit module de commande reçoit un tel signal d'induction relatif à l'eau chaude et ouvre ladite vanne électromagnétique d'arrivée d'eau chaude (440) au lieu de ladite vanne électromagnétique d'arrivée d'eau froide (430).

9. Procédé selon la revendication 8, dans lequel, après avoir reçu ledit signal d'induction relatif à un type d'eau, ledit module de commande active un dispositif indicateur de température d'eau correspondant audit type d'eau.

10. Procédé selon la revendication 9, ledit module de commande comprenant une fonction de mémoire, adaptée pour enregistrer les informations concernant ledit type d'eau qui est sélectionné par ladite zone de détection de basculement de température d'eau, ce qui permet de fournir de l'eau avec le type enregistré pour la dernière utilisation lorsque ladite zone de détection de commande d'interrupteur est touchée la fois suivante.

11. Procédé selon la revendication 10, ledit module de détection tactile comprenant des fonctions de verrouillage et de déverrouillage des touches, lorsque la fonction de verrouillage des touches est activée, tout toucher sur ladite zone de détection de commande d'interrupteur ou ladite zone de détection de basculement de température d'eau ne fonctionnant pas.
